# EUROPEAN PATENT APPLICATION

(11) **EP 1 443 031 A1**
(43) Date of publication of application: **04.08.2004**
(21) Application number: 02768012.3
(22) Date of filing: 24.09.2002
(51) Int. Cl.: C04B 35/66, C09D 7/12

(54) **THERMALLY INSULATING COATING MATERIAL FOR REFRACTORY CONTAINING CARBON**

(30) Priority: 26.09.2001 JP 2001294583
(71) Applicant: SHINAGAWA REFRACTORIES CO., LTD., Tokyo 102-0073 (JP)
(72) Inventor: TSUKAMOTO, Noboru, Shinagawa Refractories Co., Ltd, Chiyoda-ku, Tokyo 102-0073 (JP); SHIKE, Shuji, Shinagawa Refractories Co., Ltd., Chiyoda-ku, Tokyo 102-0073 (JP); IIDA, Eishi, Shinagawa Refractories Co., Ltd., Chiyoda-ku, Tokyo 102-0073 (JP)
(74) Representative: HOFFMANN EITLE
(86) International application number: PCT/JP2002/009765
(87) International publication number: WO 2003/027040

(57) **Abstract**

The present invention provides a thermal insulation coating material for a carbon-containing refractory that prevents surface oxidation of the carbon-containing refractory and that can form a thermal insulation layer when heated at a high temperature. The thermal insulation coating material for a carbon-containing refractory according to the present invention is characterized by including a refractory material containing hollow refractory particles whose content is 50 to 97% by weight and a part or the whole of the balance being clay with the content of the clay being 30% by weight or less and a liquid binder added to the refractory material in an amount of 20 to 170% by weight in outer percentage.

## Description

### TECHNICAL FIELD

The present invention relates to a thermal insulation coating material that prevents surface oxidation of a carbon-containing refractory, suppresses thermal dissipation through the surface thereof as a thermal insulation layer and at the same time that causes no problem environmental health problems.

### BACKGROUND ART

Casting refractories for use in continuous casting of steel include carbon-containing refractories, for example, alumina-graphitic material, zirconia-graphitic material, or the like. A carbon-containing refractory is coated with an antioxidant composed mainly of glass powder on the surface thereof in order to prevent oxidation of carbon during its preheating and use. Further, it has been commonly and widely performed to wrap a thermal insulation material composed of glass fiber or ceramic fiber around the outer surface of carbon-containing refractories in order to prevent temperature decreases due to thermal dissipation from the surface thereof after completion of its preheating and during use. However, in recent years, thermal insulation materials composed of fibrous substances such as glass fiber and ceramic fiber have come to cause environmental health problems.

To solve such problems, JP 7-247174A, for example, discloses a thermal insulation antioxidant for a graphite-containing refractory having heat insulating properties including compounded therein a mixture of 3 to 30% by weight of vermiculite heat treated at 300 to 1,200°C, 1 to 30% by weight of one or more from among obsidian, pearlite, pitchstone, and expanded shale that will form hollow structures at a temperature of 800°C or more in an unheated state, and 40 to 96% by weight of glass powder that softens and melts at a temperature in the range of 400 to 1, 500°C, or one or more refractory powders from among agalmatolite, silica stone, chamotte, mullite, alumina, molten silica, zirconia, and magnesia, with 20 to 250% by weight in outer percent of a liquid binder.

Also, JP 9-157045A discloses a fire resistant heat insulating castable refractory characterized by consisting of 15 to 70% by weight of hollow granules of highly fire resistant ceramics having a particle size of 0.5 to 6.0 mm, 10 to 35% by weight of fire resistant stock having a particle size of 1 mm or less, 10 to 40% by weight of an intermediate of η-, δ-, χ-, or γ-alumina, 0.5 to 5.0% by weight of micro-silica, 0.01 to 0.4% by weight of an air entrainer, and 0.01 to 0.5% by weight of a thickener.

Further, JP 11-49577Adisclosesapreparedunshapedrefractory characterized by including a mixture of 15 to 70% by weight of hollow alumina particles having a diameter of 0.5 to 6.0 mm, 2 to 30% by weight of at least one first fine refractory stock having a diameter of 1 mm or less consisting mainly of magnesia and spinel, 8 to 60% by weight of second fine refractory stock having a diameter of 1 mm or less consisting mainly of at least one of alumina, mullite, silica, and zirconia, 5 to 45% by weight of at least one of hydraulic alumina and alumina cement containing 65% byweight ormore of alumina, 0.01 to 0.4% by weight of an air entrainer, and 0.01 to 0.5% by weight of a thickener.

However, although in JP 7-247174A, the thermal insulation antioxidant for graphite-containing refractory is prescribed to contain at least one of obsidian, pearlite, pitchstone, and expanded shale (hereinafter referred to as "expandable pearlite") in an unheated state in a content of 1 to 30% by weight, compounding 30% by weight of the expandable pearlite thereto does not result in a substantially sufficient expanded thermal insulation layer upon heating. In addition, the expandable pearlite expands upon heating but once it has been expanded, the adhesion with the graphite-containing refractory, the matrix, becomes poor, thereby forming gaps between the matrix and the expanded layer, which leads to peeling off of the expanded layer.

Further, use of refractory hollow particles having a large particle size in the fire resistant heat insulating castable refractory disclosed in JP 9-157045A makes it difficult to form a thermal insulation layer when the refractory is used as a thermal insulation coating material for a carbon-containing refractory. In addition, because it contains no glass phase-forming component, a problem arises that the bonding force of the thermal insulation layer is insufficient in the temperature range in which the carbon-containing refractory is used.

Furthermore, also in the prepared unshaped refractory disclosed in JP 11-49577A, use is made of refractory hollow particles having a large particle size; therefore, when the refractory is used as a thermal insulation coating material for a carbon-containing refractory, formation of a thermal insulation layer will become difficult. In addition, since it contains hydraulic alumina or alumina cement, when the refractory is applied as a thermal insulation coating material for a carbon-containing refractory, cracks will occur in the thermal insulation layer upon use, so that there arises a problem that the thermal insulation layer tends to be peeled off more easily from the matrix.

### DISCLOSURE OF THE INVENTION

Therefore, an object of the present invention is to provide a thermal insulation coating material for a carbon-containing refractory that prevents surface oxidation of the carbon-containing refractory and that can form a thermal insulation layer when heated at a high temperature.

To attain the above-mentioned object and realize a stabilized antioxidant effect and formation of a thermal insulation layer, a hollow refractory powder is applied to the thermal insulation coating material for a carbon-containing refractory of the present invention.

Namely, a thermal insulation coating material for a carbon-containing refractory according to the present invention is characterized by including a refractory material containing hollow refractory particles whose content is 50 to 97% by weight with a part or the whole of the balance being clay and the content of the clay being 30% by weight or less, and a liquid binder added to the refractory material in an amount of 20 to 170% by weight in outer percentage.

Further, a thermal insulation coating material for a carbon-containing refractory according to the present invention is characterized by including a refractory material containing hollow refractory particles whose content is 50 to 94% by weight, clay whose content is 2 to 25% by weight, with a part or the whole of the balance being vermiculitemade free of water of crystallization and/or glass powder that softens and melts at a temperature in the range of 500 to 1,100°C, and the sum of the amounts of the vermiculite made free of water of crystallization and of the glass powder that softens and melts in a temperature range of 500 to 1,100°C being 30% by weight or less, and a liquid binder added to the refractory material in an amount of 20 to 170% by weight in outer percentage.

Further, a thermal insulation coating material for a carbon-containing refractory according to the present invention is characterized in that the coating material contains 10% by weight or less of one or more compounds selected from the group consisting of molten silica, mullite, magnesia, zirconia, spinel, alumina, chamotte, agalmatolite, and aluminous shale.

Further, a thermal insulation coating material for a carbon-containing refractory according to the present invention is characterized in that the hollow refractory particles contain SiO₂ and Al₂O₃ in a content of 40 to 80% by weight for SiO₂ and in a content of 20 to 60% by weight for Al₂O₃.

Further, a thermal insulation coating material for a carbon-containing refractory according to the present invention is characterized in that the hollow refractory particles have a particle size in the range of 30 to 800 µm.

### BRIEF DESCRIPTION OF THE DRAWINGS

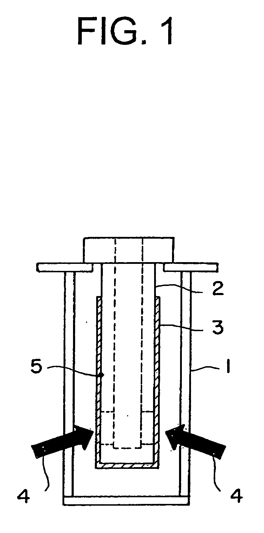

Fig. 1 is a schematic diagram showing an apparatus for measuring a temperature decrease in one example of the present invention.

In Fig. 1, 1 designates a heating box, 2 designates a inversion nozzle for continuous casting, 3 designates a film of a coating material, 4 are a gas burners, and 5 designates a position at which temperature is measured.

### BEST MODE FOR CARRYING OUT THE INVENTION

To solve the above-mentioned problems and realize a stabilized antioxidant effect and formation of a thermal insulation layer, the inventors of the present invention have made a detailed investigation on the addition amount and the like of a refractory stock suitable for suppressing as much as possible a changes in volume of the thermal insulation layer, for maintaining bonding of the texture of a thermal insulation material, and for increasing the adhesion between the thermal insulation layer and a refractory matrix, thereby achieving the present invention.

The thermal insulation coating material for a carbon-containing refractory of the present invention is characterized by containing hollow refractory particles, the content of which is in the range of 50 to 97% by weight, preferably 55 to 94% by weight, based on the refractory material. Here, less than 50% by weight of the hollow refractory particles gives insufficient thermal insulation effect and thus is not preferable. On the other hand, above 97% by weight of the hollow refractory particles results in insufficient bonding of the texture of the thermal insulation layer to cause problems of peeling or cracking and hence is also unsuitable.

Further, the hollow refractory particles used in the present invention are hollow particles whose central part is void and there is no particular limitation on the thickness of the shell or the shape of the hollow particles. The hollow particles include not only spherical closed hollow particles but also those hollow particles with an opening or openings in a part thereof. Generally, particles each having an opening area of 1/4 or less of the surface of the particle can be used as the hollow particles in the present invention. The hollow particles have a void capacity of usually 50 to 90%, preferably 60 to 80%. Further, the hollow particles can be obtained from a mineral stock consisting mainly of silica and alumina by pulverization, calcination, ore floatation, drying, classification, and the like. They are commercially available under trade names such as E Spheres, etc.

In the thermal insulation coating material for a carbon-containing refractory of the present invention, the hollow refractory particles contain SiO₂ and Al₂O₃ in a content in the range of 40 to 80% by weight for SiO₂ and in a content in the range of 20 to 60% by weight for Al₂O₃. Here, the case where the content of SiO₂ is less than 40% by weight and the content of Al₂O₃ is above 60% by weight is not preferable. This is because the sinterability of the hollow refractory particles is decreased, which gives insufficient bonding of the texture of the thermal insulation layer when heated to high temperatures. As a result, the coating material tends to peel off more easily from the matrix. On the other hand, if the content of SiO₂ in the hollow refractory particles is above 80% by weight and the content of Al₂O₃ is less than 20% by weight, the heat resistance of the hollow refractory particles decreases, which causes a problem of extended erosion of the thermal insulation coating part when the carbon-containing refractory is used or the like. More preferably, the contents of SiO₂ and Al₂O₃ are: 50 to 70% by weight for SiO₂ and 30 to 50% by weight for Al₂O₃. Further, the hollow refractory particles can contain components other than SiO₂ and Al₂O₃ within the above-mentioned ranges of the contents of SiO₂ and Al₂O₃. In this case, the content of components other than SiO₂ and Al₂O₃ is preferably 10% by weight or less . If the sum of the contents of these components is above 10% by weight, the heat resistance of the hollow refractory particles is decreased, causing a problem of softening and melting of the coating material when it is used at high temperatures. Examples of the components other than SiO₂ and Al₂O₃ include TiO₂, Fe₂O₃, Na₂O, K₂O, CaO, MgO, and Li₂O.

The particle size range of the hollow refractory particles of the present invention is within the range of 30 to 800 µm. A particle size of less than 30 µm is unsuitable, since the kneadability of the particles with a liquid binder becomes poor, resulting in the particles being applied to a carbon-containing refractory with poor workability. Further, a particle size of less than 30 µm causes a problem of reduced thermal insulation properties. On the other hand, a particle size above 800 µm is unsuitable, since the texture binding force of the thermal insulation layer upon heating is reduced causing problems in that cracks tend to occur in the thermal insulation layer or the thermal insulation layer tends to peel off more easily from the matrix or the like.

In the thermal insulation coating material for a carbon-containing refractory of the present invention, clay is present in a compounding amount in the range of 30% by weight or less, preferably 3 to 20% by weight. Here, a compounding amount of clay above 30% by weight is unsuitable, since sintering contraction of the thermal insulation layer during preheating and use becomes large due to the clay components, with the result that cracks tend to occur in the thermal insulation coating layer.

Further, the thermal insulation coating material for a carbon-containing refractory of the present invention can contain in combination vermiculite made free of water of crystallization and/or glass powder that softens and melts at a temperature in the range of 500 to 1,100°C as the component other than the above-mentioned hollow refractory particles and clay. Use of vermiculite in combination allows the thermal insulation effect to be exhibited from a lower temperature region. Also, use of glass powder that softens and melts at a temperature in the range of 500 to 1,100°C in combination makes it possible to bond the texture of the thermal insulation layer at a lower temperature. Here, it is desirable that the compounding ratio of vermiculite be set at 20% by weight or less. This is because vermiculite that has been heat treated and made free of water of crystallization is porous and has a small density and hence its volume is bulky when it is used as a coating material. On the other hand, the addition amount of the glass powder is preferably 10% by weight or less. This is because if it is above 10% by weight, glass melts too much at high temperatures making it difficult to maintain the coating layer. Also, it is desirable that the sum of the addition amounts of vermiculite and the glass powder be 30% by weight or less. Note that the softening temperature of the glass powder is most preferably in the range of 500 to 1,100°C taking into consideration the general preheating conditions and temperature conditions during use of the carbon-containing refractory.

Further, the thermal insulation coating material for a carbon-containing refractory of the present invention can contain in combination one or more compounds selected from the group consisting of molten silica, mullite, magnesia, zirconia, spinel, alumina, chamotte, agalmatolite, and aluminous shale as the components other than the above-mentioned hollow refractory particles, clay, vermiculite and glass powder. These compounds are compounded depending on the heating conditions and use conditions of the carbon-containing refractory in order to adjust the heat resistance of the thermal insulation coating layer at high temperatures and to adjust suppression of the occurrence of cracks in the thermal insulation coating layer or peeling thereof during use. Here, it is desirable that the addition amount of the compounds be 10% by weight or less. An addition amount above 10% by weight is unsuitable, since the sintering contraction due to these components during heating and use becomes large, causing problems in that cracks tend to occur in the thermal insulation layer or the thermal insulation layer tends to peel off more easily from the matrix or the like.

The refractory stocks including the above-mentioned hollow heat resistant particles, clay, vermiculite, glass powder, and the like are mixed with a liquid binder. The liquid binder is preferably one that is dried to form a coating film when the coating material is applied to the surface of a carbon-containing refractory at a temperature of 300°C or less. For example, potassium silicate, aluminum phosphate, colloidal silica, etc. can be used. Also, it is possible to use plural kinds of liquid binder in combination. Note that the addition amount of the liquid binder is in the range of 20 to 170% by weight, preferably 30 to 150% by weight, in outer percentage based on the refractory material. Here, the addition amount of the liquid binder less than 20% by weight in outer percentage is not preferable, since no effect of addition is exhibited and its application to the surface of the carbon-containing refractory becomes difficult. On the other hand, a compounding amount above 170% by weight in outer percentage is not preferable, since the coatability to the carbon-containing refractory is reduced due to a decrease in the viscosity.

For the application of the coating material to the surface of the carbon-containing refractory, brush coating, blowing, dipping, etc. can be employed. In each application method, the addition amount of the liquid binder is adjusted so as to be in the range of 20 to 170% by weight. Note that in the present invention, the method used for application to the surface of the carbon-containing refractory is not particularly limited but it may be selected depending on the shape and size of the carbon-containing refractory to which application is to be performed, application environment and the like.

### EXAMPLES

Hereinafter, the coating material for a carbon-containing refractory of the present invention will be described in more detail by way of examples. Note that the present invention should not be considered to be limited by these examples.

### (Example 1)

Coating materials of the inventive product and of comparative products in the compounding ratios shown in Table 1 belowwere obtained. Note that the hollow refractory particles used here had a white appearance and a bulk specific gravity of 0.25 to 0.42 g/cm³, the compositions and particle sizes of which were as follows:

**Table 1**

| | Composition (wt %) | | | | | Particle size (µm) |
|---|---|---|---|---|---|---|
| Hollow refractory particles | SiO₂ | Al₂O₃ | Fe₂O₃ | CaO | TiO₂ | |
| A | 60 | 38 | 0.4 | 0.2 | 1.1 | 200 |
| B | 35 | 63 | 0.4 | 0.1 | 0.5 | 250 |
| C | 62 | 36 | 0.6 | 0.1 | 0.4 | 1000 |
| D | 74 | 24.5 | 0.3 | 0.2 | 0.7 | 450 |

Then, the obtained coating materials were coated by blowing them onto outer surfaces of continuous casting immersion nozzles, respectively, made of a carbon-containing refractory having a composition of 50% by weight of Al₂O₃, 25% by weight of SiO₂, and 25% by weight of carbon to a thickness of about 3 mm, followed by drying at 130°C for 4 hours. Subsequently, as shown in Fig. 1, the continuous casting immersion nozzle (2) was set in the heating box (1), which was heated to 1,250°C by using the gas burners (4) and retained at that temperature for 6 hours. Thereafter, the continuous casting immersion nozzle (2) was taken out of the heating box (1) and left in the air while measuring a temperature decrease (after 10 minutes) at the temperature measuring position (5) below the coating material film (3). Further, after cooling, the state of the coating material film was visually observed. Note that the melting/softening temperature of the glass powder used in the invention product 1 was 1,000°C and the vermiculite used in the invention product 1 was one that was heat treated at 500°C to make it free of water of crystallization. The particle size of the vermiculite was 1 mm or less and the particle size of the glass powder was 0.3 mm or less.

The results obtained are described together in Table 2. Note that, the comparative product 1 was a blank to which no coating material was blown. The comparison product 2 was one in which a ceramic paper having a thickness of 3 mm was affixed to a continuous casting immersion nozzle made of the same material as described above.

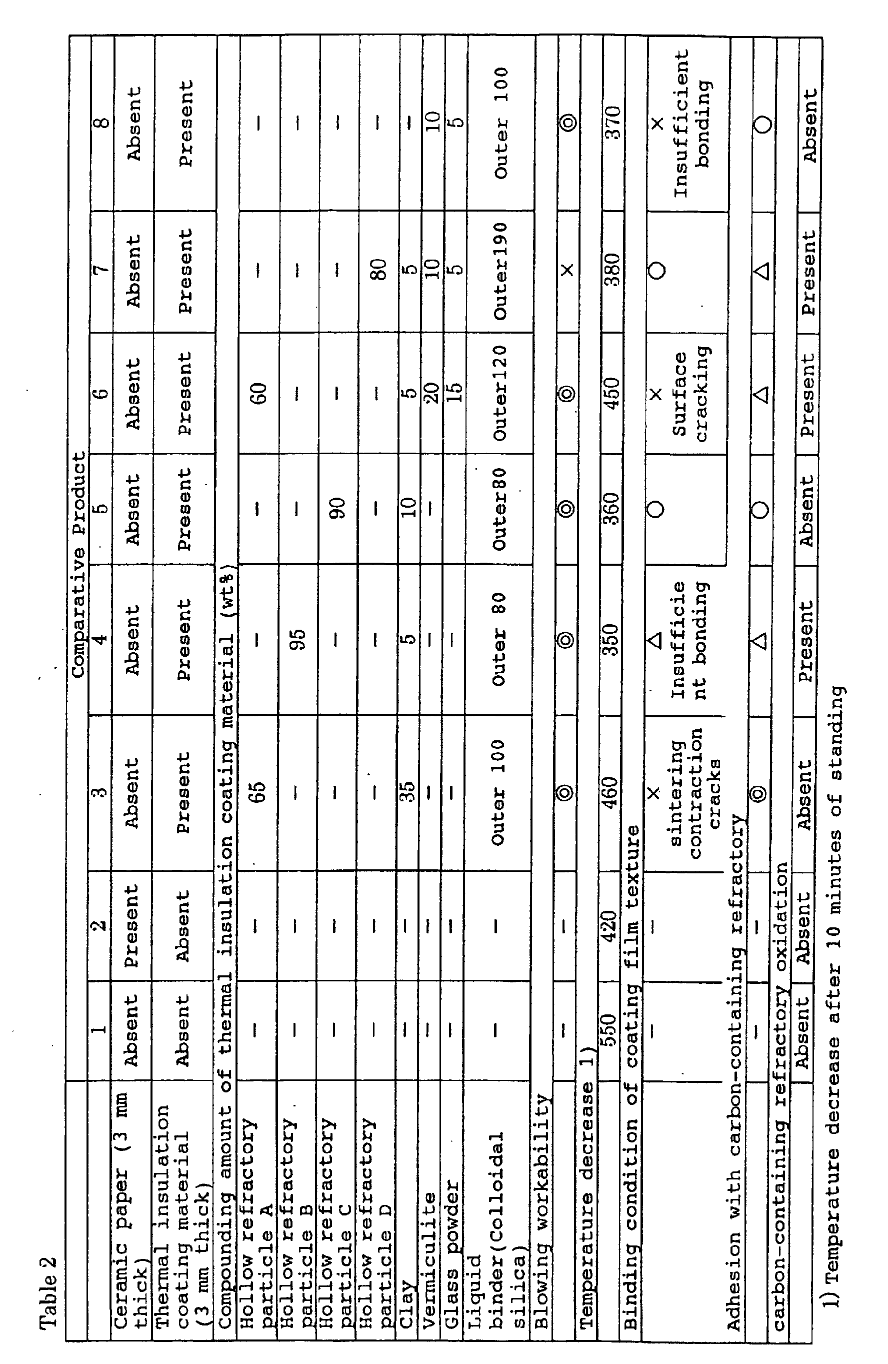

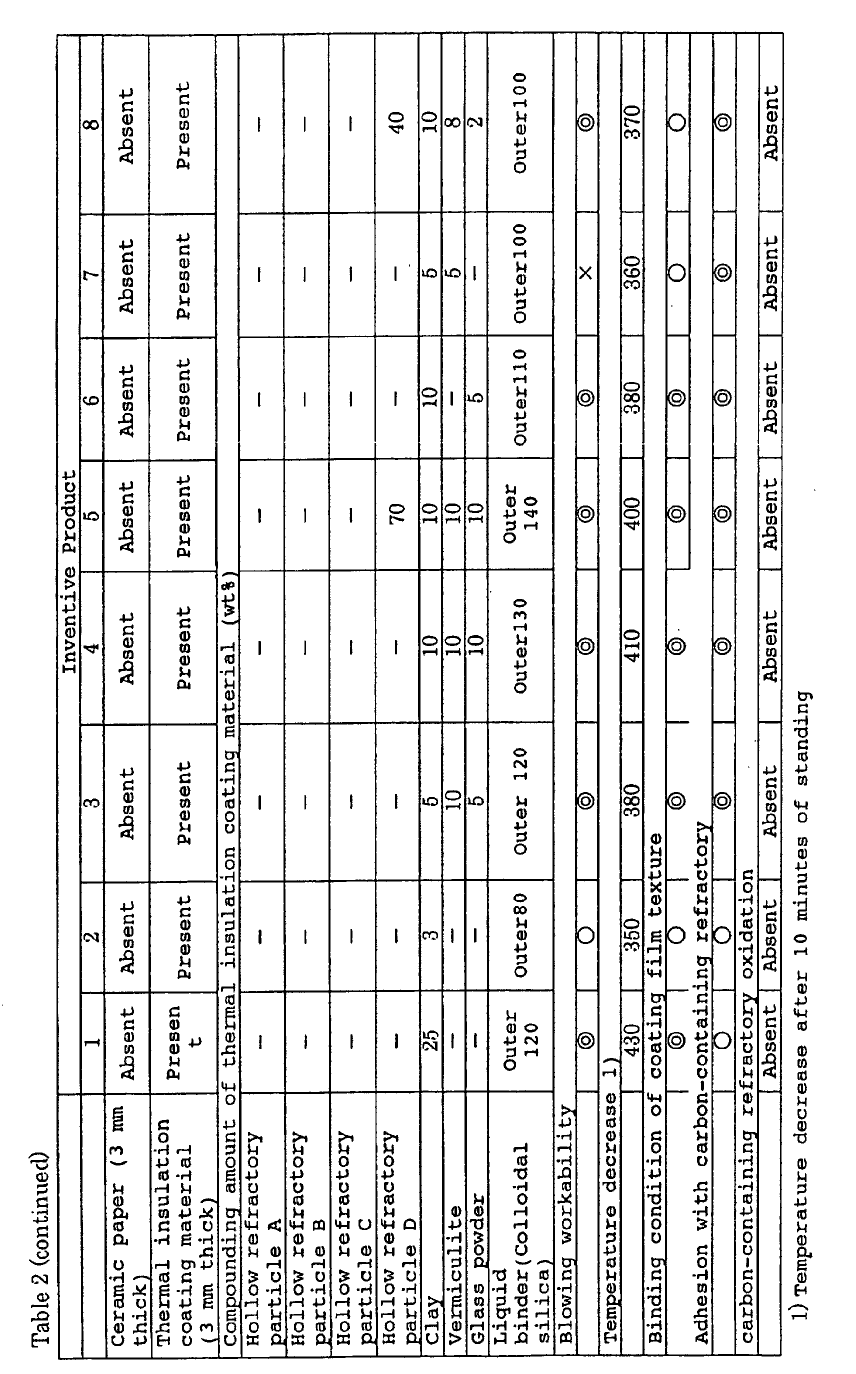

### (Example 2)

Formulations of the inventive products and of comparative products in compounding ratios shown in Table 3 below were obtained. Note that the hollow refractory particles used in Example 2 were the same as the hollow refractory particles D in Example 1. Also, for the glass powder, clay, and vermiculite, the same raw materials as those used in Example 1 were used. For the molten silica, mullite, magnesia, zirconia, spinel, alumina, chamotte, agalmatolite and aluminous shale, raw materials of 0.3 mm or less were used, respectively.

The obtained coating materials were coated by blowing onto outer surfaces of continuous casting immersion nozzles, respectively, made of a carbon-containing refractory having a composition of 60% by weight of Al₂O₃, 10% by weight of SiO₂, and 30% by weight of carbon to a thickness of about 0.3 mm, followed by drying at 150°C for 5 hours. Subsequently, heating test and evaluation of them were performed in the same manner as in Example 1. The results obtained are described together in Table 3.

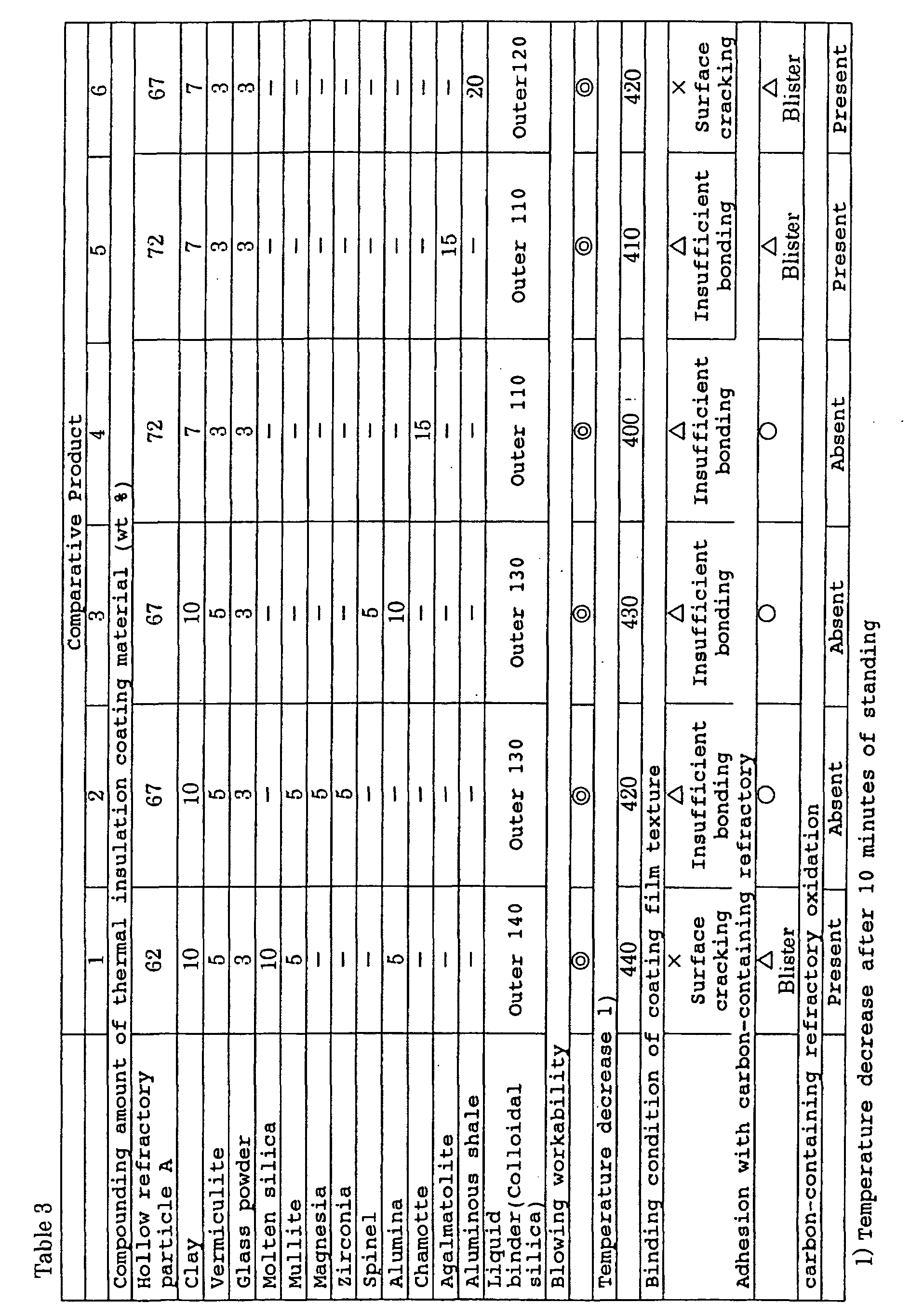

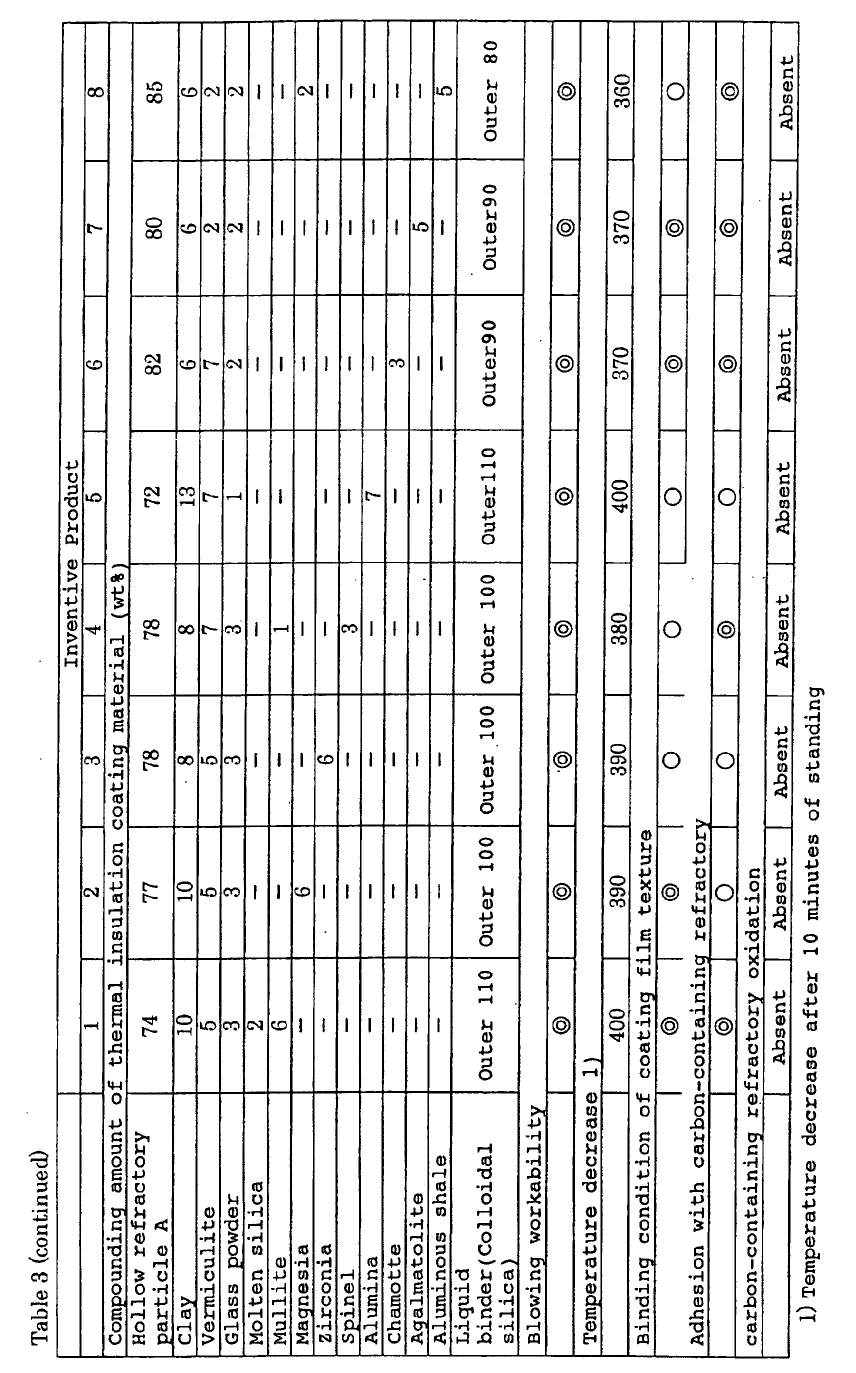

### INDUSTRIAL APPLICABILITY

The coating material of the present invention has the effects of preventing surface oxidation of a carbon-containing refractory and of forming a thermal insulation layer made of a film of the coating material when heated at high temperatures and thus is useful as a thermal insulation coating material in continuous casting of steel.

## Claims

1. A thermal insulation coating material for a carbon-containing refractory that prevents surface oxidation of the carbon-containing refractory and forms a thermal insulation layer when heated at a high temperature, **characterized in that** the thermal insulation coating material comprises a refractory material containing hollow refractory particles whose content is 50 to 97% by weight with a part or the whole of the balance being clay and the content of the clay being 30% by weight or less, and a liquid binder added to the refractory material in an amount of 20 to 170% by weight in outer percentage.

2. A coating material for a carbon-containing refractory that prevents surface oxidation of the carbon-containing refractory and forms a thermal insulation layer when heated at a high temperature, **characterized in that** the coating material comprises a refractory material containing hollow refractory particles whose content is 50 to 94% by weight, clay whose content is 2 to 25% by weight, with a part or the whole of the balance being vermiculite made free of water of crystallization and/or glass powder that softens and melts at a temperature in the range of 500 to 1,100°C and the sum of the amounts of the vermiculite made free of water of crystallization and of the glass powder that softens and melts in a temperature range of 500 to 1,100°C being 30% by weight or less, and a liquid binder added to the refractory material in an amount of 20 to 170% by weight in outer percentage.

3. A coating material for a carbon-containing refractory according to claim 1 or 2, **characterized in that** the coating material contains 10% by weight or less of one or more compounds selected from the group consisting of molten silica, mullite, magnesia, zirconia, spinel, alumina, chamotte, agalmatolite, and aluminous shale.

4. A coating material for a carbon-containing refractory according to any one of claims 1 to 3, **characterized in that** the hollow refractory particles contain SiO₂ and Al₂O₃ in a content of 40 to 80% by weight for SiO₂ and in a content of 20 to 60% by weight for Al₂O₃.

5. A coating material for a carbon-containing refractory according to any one of claims 1 to 4, **characterized in that** the hollow refractory particles have a particle size in the range of 30 to 800 µm.
